# EUROPÄISCHE PATENTSCHRIFT

(11) **EP 0 518 911 B1**
(45) Veröffentlichungstag und Bekanntmachung des Hinweises auf die Patenterteilung: **19.10.1994**
(21) Anmeldenummer: 91905112.8
(22) Anmeldetag: 07.03.1991
(51) Int. Cl.: H04L 25/28

(54) **SCHALTUNGSANORDNUNG ZUR POTENTIALGETRENNTEN ÜBERTRAGUNG VON IMPULSEN BELIEBIGER LÄNGE UND FREQUENZ FÜR DAS ANSTEUERN VON TRANSISTORSCHALTERN**
CIRCUITS FOR THE SEPARATE POTENTIAL TRANSMISSION OF PULSES OF ANY LENGTH OR FREQUENCY FOR DRIVING TRANSITOR CIRCUITS
CIRCUITS DE TRANSMISSION A POTENTIEL SEPARE D'IMPULSIONS DE N'IMPORTE QUELLES LONGUEUR ET FREQUENCE POUR LA COMMANDE DE CIRCUITS A TRANSISTORS

(30) Priorität: 07.03.1990 DD 338460
(43) Veröffentlichungstag der Anmeldung: 23.12.1992
(73) Patentinhaber: SIEMENS AKTIENGESELLSCHAFT, 80333 München (DE)
(72) Erfinder: BEYER, Erhard, D-9162 Auerbach/E. (DE)
(86) Internationale Anmeldenummer: EP9100424
(87) Internationale Veröffentlichungsnummer: WO9114327

(56) Entgegenhaltungen:
- EP-A- 0 198 263
- DE-A- 2 821 812
- IEEE Applied Power Electronics Conference and Exposition, New Orleans, Louisiana, 28. April - 1. Mai 1986, IEEE; Y. Hirsch et al.: "Applications of digital PWM integrated circuits", Seiten 171-177

## Beschreibung

### Anwendungsgebiet der Erfindung

Die Erfindung bezieht sich auf das Gebiet der Elektrotechnik und ihre Anwendung ist in Informationsteilen von elektronischen Geräten, beispielsweise in Stromversorgungseinheiten und Transistorpulsstellern, möglich und zweckmäßig.

### Charakteristik des bekannten Standes der Technik

In elektronischen Geräten zur Stromversorgung, beispielsweise Schaltnetzteilen, und zur Antriebssteuerung, beispielsweise Transistorpulsstellern, ist aus Sicherheitsgründen eine Potentialtrennung zwischen dem Informationsteil auf Hochspannung oder Netzniveau erforderlich und deshalb nachzuweisen. Zur Übertragung einer Regelinformation in Form von pulsweitenmodulierten Impulsen können beispielsweise Optokoppler benutzt werden. Da aber Optokoppler, genügender Dynamik (T - 50 Hz; Tᵢ - 50 ns) und Isolationsfähigkeit nicht zur Verfügung stehen, wird zur Vermeidung dieser Nachteile, wie in Application note "Optimum Basis Drive and Protection of Switching Transistors using the UAA 4002", Philipp Maige Laborative d'application, Thomson-Efcis integrated Circuits, March 1983, beschrieben, ein differenzierender Impulsübertrager verwendet. Bei dieser Anordnung für eine optimale Basis-Erregung und für einen Schutz von Schalttransistoren unter Verwendung eines Schaltkreises UAA 4002 wird ein "PE gel-mode" durch Anlegen eines "high"Logik-Pegels an einen ersten Eingang der Eingangsanpassungseinheit des Schaltkreises UAA 4002 (B 4002 D) ausgewählt. Dazu kann dieser Eingang potentialfrei gelassen oder über einen Widerstand mit einem Mindestwert an die positive Stromversorgungsspannung angeschlossen werden. Ein weiterer Eingang der Eingangsspannungseinheit des Schaltkreises UAA 4002 (B 4002 D) ist TTL- und CMOS-kompatibel und bei logisch "I" aktiv. In Hinsicht auf die Fortpflanzungszeit innerhalb der Schaltung wird das Ausgangssignal um annähernd 300 ns relativ zum Eingangssignal verzögert. Wenn der Steuerschaltkreis galvanisch isoliert sein muß, wird als Betriebsart "Puls mode" verwendet. Dabei wird der Schaltkreis UAA 4002 durch alternative Impulse gesteuert, indem ein logischer "low"-Pegel an den ersten Eingang der Eingangsspannungseinheit des Schaltkreises UAA 4002 (B 4002 D) durch direktes Verbinden mit der Masse angelegt wird. Die am zweiten Eingang der Eingangsspannungseinheit angepaßten Steuersignale müssen eine Amplitude mit einer Mindestspannung von ± 2 V haben, und auch unter den Stromversorgungsspannungen des Schaltkreises sein. Insbesondere bedeutet das, daß die negative Stromversorgungsspannung einen absoluten Wert über 2,5 V für diese Operationsart aufweisen muß. Wenn durch eine Störung oder als Ergebnis eines Fehlers bei der Schaltung eine der negativen Stromversorgungsspannungen einen absoluten Wert von weniger als 2 V haben sollte, werden die negativen Sperrimpulse ignoriert, und es ergibt sich eine dauernde Stromführung. Diese besonders gefährliche Situation kann durch ein Uberwachen der negativen Stromversorgungsspannung vermieden werden. Negative Impulse mit einer Amplitude größer als die Amplitude der negativen Versorgungsspannung müssen zur Vermeidung von Störungen außerhalb des Schaltkreises mittels einer Diode unterdrückt werden. Trotzdem ist in allen Fällen ein genügend hoher Wert von - 4 V bis - 5 V für die Versorgungsspannung und eine Impulsdauer von 100 ns erforderlich, Wie beim "Pegelmode" hat die Fortpflanzungszeit des Signals in der Schaltung eine Verzögerung von annähernd 300 ns zwischen den Schaltkreisausgangssignalen und den entsprechenden Steuerimpulsen. Häufig ist eine galvanische Isolierung zwischen dem Steuerschaltkreis zum Erzeugen der stromführenden Impulse und dem Schutzschaltkreis für Schaltkreistransistoren notwendig. Für die Übertragung niedriger Frequenzen ist dafür ein Optokoppler verwendbar. Bei höheren Frequenzen wird deshalb ein Impuls-Wandler mit Ferritkern verwendet. Vorteilhaft ist es, anstelle der Übertragung der stromführenden Impulse in ihrer Gesamtheit die Sättigung des Magnetkreises zur Realisierung eines Differenz-Wandlers zu benutzen. Die Größe der magnetischen Komponenten wird dabei reduziert, weil ein kleiner Ferritkern mit nur wenigen Windungen ausreicht. Durch entsprechende Programmierung wird die Verträglichkeit des Schutzschaltkreises für Schalttransistoren und von alternativen Impulsen gewährleistet.

Der Nachteil dieser Anordnung besteht darin, daß bei sehr kurzen Ansteuerimpulsen wegen des Ausbleibens der negativen Nadel die differenzierende Wirkung des Impulsübertragers verlorengeht, so daß die angeschlossene Ansteuerschaltung für den Leistungstransistor ständig eingeschaltet bleibt und dessen Zerstörung bewirkt.

In der DE-OS 28 21 812 (H 01 F 19/04) ist eine Schaltungsanordnung zur potentialgetrennten Übertragung digitaler und analoger Signale beschrieben, die aus einer Reihenschaltung eines HF-Oszillators, eines bistabilen Kippgliedes zur Symmetrierung und eines Pufferspeichers primärseitig und einer Gleichrichterbrücke als Demodulator mit anschließendem Filter sekundärseitig besteht. Die zu übertragenden Signale werden in den Pufferspeicher eingegeben und modulieren dort das Ausgangssignal des Kippgliedes. Das erzeugte Signal wird dann potentialgetrennt mittels des Übertragers der Demodulatoreinheit mit Filtern zugeführt. Damit wird eine potentialgetrennte Übertragung von Signalen nach dem Differenzverfahren mit einem vor allem primärseitig sehr großem Aufwand realisiert.

### Ziel der Erfindung

Ziel der Erfindung ist es, bei einer Schaltungsanordnung zur potentialgetrennten Übertragung von Impulsen beliebiger Länge und Frequenz für das Ansteuern von Transistorschaltern die Funktionssicherheit in einem erweiterten Funktionsbereich zu gewährleisten und eine Zerstörung von Transistoren während der Betriebsdauer der Anordnung zu verhindern.

### Darlegung des Wesens der Erfindung

Es ist Aufgabe der Erfindung, eine Schaltungsanordnung zur potentialgetrennten Übertragung von Impulsen beliebiger Länge und Frequenz für das Ansteuern von Transistorschaltern zu schaffen, die, bestehend aus einer Kleinspannungsseite mit einer Pulsweitenmodulierte Ausgangssignale erzeugenden Reglereinheit, aus einer Hochspannungsseite mit einer Demodulatoreinheit, mit einer Ansteuereinheit und mit einer Transistorschaltereinheit und aus einer magnetischen Impulsübertragereinheit zum Koppeln von Klein- und Hochspannungsseite eine Übertragung auf Hochfrequenzniveau mit hoher Dynamik und Isolationsfestigkeit ermöglicht.

Erfindungsgemäß wird die Aufgabe dadurch gelöst, daß sich zwischen dem Ausgang der Reglereinheit und der Demodulatoreinheit in Reihe auf der Kleinspannungsseite eine mit hoher Modulationsfrequenz arbeitende Zusatzmodulatoreinheit und eine die Klein- und die Hochspannungsseite verbindende magnetische Übertragereinheit befinden. Diese Übertragereinheit ist auf eine einzelne Hochspannungskabelwindung als Primärwicklung und eine oder mehrere Schaltdrahtwindungen als Sekundärwicklung reduziert, die auf einen Doppellochkern aufgebracht sind. Der gesamte Übertrager ist in einem Isoliermasseblock untergebracht.

### Ausführungsbeispiel

Die Erfindung soll nachstehend an einem Ausführungsbeispiel näher erläutert werden. In der zugehörigen Zeichnung zeigen:
Fig. 1: das Blockschaltbild der Schaltungsanordnung zur potentialgetrennten Übertragung von Impulsen beliebiger Länge, Spannung und Frequenz für das Ansteuern von Transistorschaltern,
Fig. 2: eine Detailschaltung der Anordnung zum Übertragen der Ansteuerimpulse für einen Leistungstransistor LTR,
Fig. 3: ein Schema des mechanischen Aufbaues der magnetischen Übertragereinheit MÜTRAG zwischen der Klein- und der Hochspannungsseite.

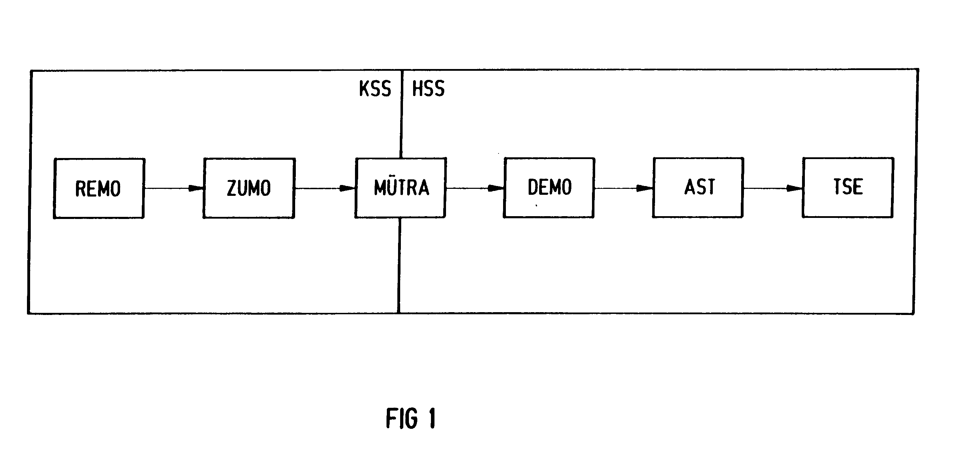

In Fig. 1 ist das Blockschaltbild der Schaltungsanordnung zur potentialgetrennten Übertragung von Impulsen beliebiger Länge und Frequenz für das Ansteuern von Transistorschaltern dargestellt. Auf der Kleinspannungsseite KSS ist eine Reglerein heit REMO über eine Zusatzmodulatoreinheit ZUMO zum Eingang einer magnetischen impulsübertragereinheit MÜTRA geführt, deren Ausgang über eine Demodulatoreinheit DEMO und eine Ansteuereinheit AST mit einer Transistorschaltereinheit TSE auf der Hochspannungsseite HSS verbunden ist.

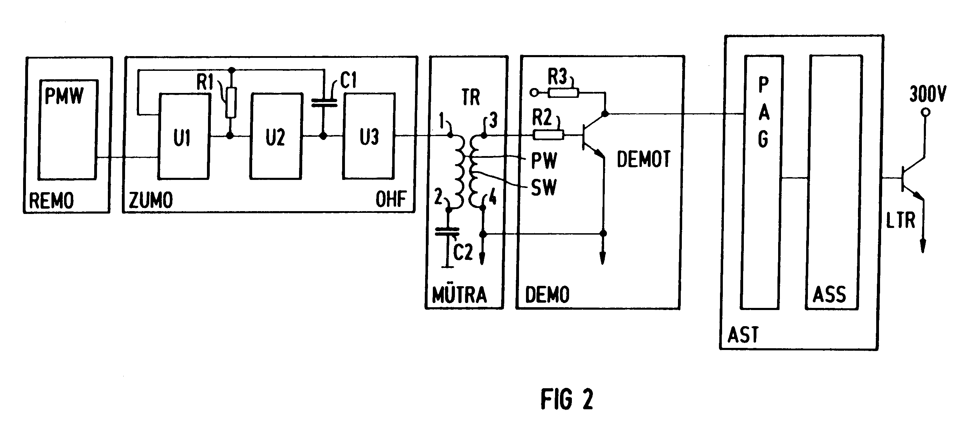

Fig. 2 zeigt eine Detailschaltung der Anordnung zum Übertragen der Ansteuerimpulse für einen Leistungstransistor LTR und eine mögliche konkrete Ausgestaltung der einzelnen Einheiten. In der Reglereinheit REMO ist ein Pulsweitenmodulator PWM angeordnet, dessen Ausgang zur Zusatzmodulatoreinheit ZUMO geführt ist. Diese Zusatzmodulatoreinheit ZUMO enthält einen mit sehr hoher Frequenz schwingenden Oszillator OHF zur Erzeugung der Modulationsfrequenz, der aus einer Serienschaltung von drei UND-Gliedern U 1, U 2, U 3 mit einer R-C-Beschaltung R 1; C 1 aufgebaut ist. Als magnetische Übertragereinheit MÜTRA ist ein Treibertransformator TR eingesetzt, dessen Primärwicklung PW mit dem Anschluß 1 an den Ausgang des Oszillators OHF in der Zusatzmodulatoreinheit ZUMO und mit dem Anschluß 2 über einen Kondensator C 2 an Massepotential angeschlossen ist. Der Anschluß 3 der Sekundärwicklung SW ist über einen Widerstand R 2 zur Basis des Demodulatortransistors DEMOT geführt, während der Emitter mit dem Anschluß 4 und der Kollektor mit einem Widerstand R 3 verbunden sind. Über ein ebenfalls am Kollektor liegendes Regelanpassungsglied PAG ist der Ansteuerschaltkreis ASS angeschlossen. Das Regelanpaßglied PAG und der Ansteuerschaltkreis ASS bilden zusammen die Ansteuereinheit AST, deren Ausgang mit dem Leistungstransistor LTR verbunden ist. Am Kollektor dieses Leistungstransistors LTR ist ein Spannungspotential von 300 V vorhanden. Als Ansteuerschaltkreis ASS kann der Schaltkreis UAA 4002 bzw. der Ansteuerschaltkreis für Leistungstransistoren B 4002 D verwendet werden (Fachbereichsstandard TGL 43 614 vom Juni 1985).

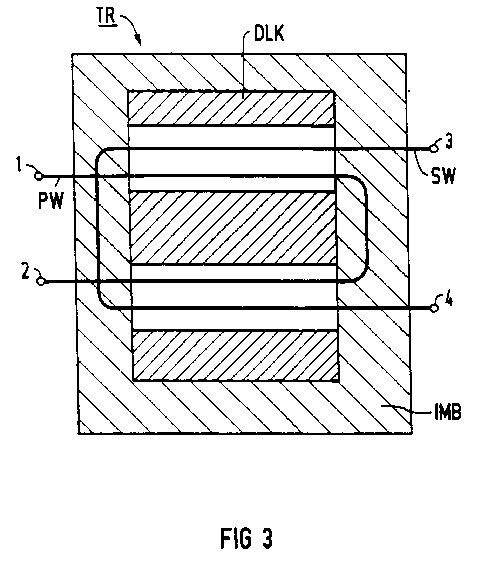

Aus Fig. 3 ist der mechanische Aufbau des verwendeten Treibertransformators TR zur Impulsübertragung mit Hilfe einer Querschnittsdarstellung ersichtlich. Auf einen Doppellochkern DLK, beispielsweise innere Ferritkern, sind primärseitig als Wicklung PW eine Windung Hochspannungskabel und sekundärseitig ein bis vier Windungen Schaltdraht als Sekundärwicklung SW aufgebracht. Der gesamte Treibertransformator TR wird in einen evakuierten Isoliermasseblock IMB, beispielsweise aus Epoxidharz, angeordnet wodurch der Treibertransformator TR hochspannungsfest ist. Bei einem derartigen Treibertransformator TR sind die geforderten Kriechstrecken größer als 8 mm bzw. die Prüfspannung von 4 KV_{eff} nachweisbar. Die Anordnung arbeitet auf folgende Weise. Vom Pulsweitenmodulator PWM in der Reglereinheit REMO wird der mit einer hohen Frequenz schwingende Oszillator OHF in der Zusatzmodulatoreinheit ZUMO getastet. Die Frequenz des Oszillators OHF ist dabei so hoch zu wählen, daß auch die kürzesten zu übertragenden Impulse durch mehrere Schwingungen des Oszillators OHF aufgelöst werden. Die auf diese Weise erzeugten pulsweitenmodulierten Impulse werden dem Treibertransformator TR primärseitig zugeführt, der der Potentialtrennung zwischen der Kleinspannungsseite KSS und Hochspannungsseite HSS bzw. Netzseite dient. Die Isolation dieses Transformators TR ist gemäß Fig. 3 so realisiert, daß alle Forderungen hinsichtlich der Spannungsfestigkeit erfüllt sind. Auf der Hochspannungsseite HSS werden in einer dem Treibertransformator TR nachgeschalteten Demodulatoreinheit DEMO die übertragenen Impulse demoduliert und stehen nach der Regelanpassung durch das Pegelanpassungsglied PAG zur Weiterverarbeitung im Ansteuerschaltkreis ASS, z.B. UAA 4002 bzw. B 4002 D, zur Verfügung. Damit ermöglicht das Anordnen eines zusätzlichen Modulators mit einer sehr hohen Modulationsfrequenz am Ausgang einer pulsweitenmodulierte Impulse erzeugenden Reglereinheit REMO und einer magnetischen Übertragereinheit MÜTRA mit entsprechender Spannungsfestigkeit und mit geringer Koppelkapazität zum potentialgetrennten Übertragen von Impulsen beliebiger Länge und Frequenz zwischen Kleinspannungs- und Hochspannungsseite KSS, HSS, das Erzeugen von Ansteuerimpulsen für einen Leistungstransistor durch das Betreiben eines Ansteuerschaltkreises ASS vom Typ UAA 4002 bzw. B 4002 D in der Betriebsart "Pulse mode".

## Patentansprüche

1. Schaltungsanordnung zur potentialgetrennten Übertragung von Impulsen beliebiger Länge und Frequenz, die aus einer Kleinspannungsseite mit einer pulsweitenmodulierte Ausgangssignale erzeugenden Reglereinheit, aus einer Hochspannungsseite mit einer Demodulatoreinheit, einer Ansteuereinheit und einem Leistungstransistor und aus einer magnetischen Impulsübertragereinheit mit Hochfrequenzniveau zum Koppeln von Klein- und Hochspannungsseite besteht, **gekenn****zeichnet dadurch**, daß sich zwischen dem Ausgang der Reglereinheit (REMO) und der Demodulatoreinheit (DEMO) in Reihe auf einer Kleinspannungsseite (KSS) eine Zusatzmodulatoreinheit (ZUMO) und eine die Klein- und Hochspannungsseite (KSS;HSS) verbindende, aus in einem evakuierten Isoliermasseblock (IMB) eingegossene mit einer einzelnen Hochspannungskabelwindung als Primärwicklung (PW) und einer oder mehreren Schaltdrahtwindungen als Sekundärwicklung (SW) auf einen Doppellochkern (DLK) reduzierte aufgebaute magnetische Übertragereinheit (MÜTRA) mit Hochfrequenzniveau befinden.

## Claims

1. Circuit arrangement for the potentially isolated transmission of pulses of any length and frequency, which circuit arrangement is composed of a low-voltage side having a regulator unit which generates pulse-width-modulated output signals, of a high-voltage side having a demodulator unit, a drive unit and a power transistor and of a magnetic pulse transformer unit having a high-frequency level for coupling the low-voltage and high-voltage side, characterized in that, between the output of the regulator unit (REMO) and the demodulator unit (DEMO) there are situated, in series on a low-voltage side (KSS), an additional modulator unit (ZUMO) and a magnetic transformer unit (MÜTRA) having high-frequency level which connects the low-voltage and high-voltage side (KSS; HSS) and which is reduced to a double-hole core (DLK) which is encapsulated in an evacuated block of insulating material (IMB) and which has a single high-voltage cable winding as primary winding (PW) and one or more connecting wire windings as secondary winding (SW).

## Revendications

1. Montage pour la transmission, à séparation de potentiel, d'impulsions de longueur et de fréquence quelconques qui est constitué d'un côté basse tension comportant une unité de régulation produisant des signaux de sortie modulés en largeur d'impulsions, d'un côté haute tension comportant une unité de démodulation, une unité de commande et un transistor de puissance, et d'une unité magnétique de transmission d'impulsions, comportant un niveau à haute fréquence et destiné à coupler le côté basse tension et le côté haute tension, caractérisé par le fait qu'entre la sortie de l'unité de régulation (REMO) et l'unité de démodulation (DEMO) sont disposées, en série sur un côté basse tension (KSS), une unité de modulation (ZUMO) et une unité magnétique (MÜTRA) de transmission, qui a un niveau à haute fréquence, relie le côté basse tension et le côté haute tension (KSS; HSS), est enrobée dans un bloc de composition isolante (IMB), dans lequel le vide est établi, et est montée sur un noyau (DLK) à deux trous, en étant réduite à un seul enroulement de câble à haute tension en tant qu'enroulement primaire (PW) et à un ou plusieurs enroulements d'un fil de liaison en tant qu'enroulement secondaire (SW).
